# EUROPEAN PATENT APPLICATION

(11) **EP 4 742 670 A1**
(43) Date of publication of application: **13.05.2026**
(21) Application number: 24864317.3
(22) Date of filing: 02.08.2024
(51) Int. Cl.: H04N 19/167, G06T 3/40, G09G 5/14

(54) **DISPLAY METHOD AND ELECTRONIC DEVICE**

(30) Priority: 15.09.2023 CN 202311204134
(71) Applicant: Huawei Technologies Co., Ltd., Shenzhen, Guangdong 518129 (CN)
(72) Inventor: HE, Xiaoyu, Shenzhen, Guangdong 518129 (CN); WANG, Ziyu, Shenzhen, Guangdong 518129 (CN)
(74) Representative: Pfenning, Meinig & Partner mbB
(86) International application number: PCT/CN2024/109614
(87) International publication number: WO 2025/055594

(57) **Abstract**

This application provides a display method and an electronic device. The display method includes: An electronic device displays a second image on a first display based on a first image output by an SoC, where a resolution of the first image is less than a resolution of the second image, the first image includes K first areas, the second image includes K second areas, different first areas in the K first areas correspond to different second areas in the K second areas, and a location of each first area in the first image is the same as a location of a corresponding second area in the second image. A resolution of a first target area in the K first areas is the same as a resolution of a corresponding second target area in the K second areas, content of the first target area is the same as content of the second target area, and content of each second area other than the first target area in the K second areas is obtained by upsampling content of a first area corresponding to the second area.

## Description

This application claims priority to Chinese Patent Application No. 202311204134.0, filed with the China National Intellectual Property Administration on September 15, 2023 and entitled "DISPLAY METHOD AND ELECTRONIC DEVICE", which is incorporated herein by reference in its entirety.

### TECHNICAL FIELD

This application relates to the field of terminal devices, and in particular, to a display method and an electronic device.

### BACKGROUND

With the development of terminal display technologies, virtual reality (virtual reality, VR), augmented reality (augmented reality, AR), and mixed reality (mixed reality, MR) technologies are applied to more scenarios. Users can wear head-mounted display devices to experience different effect such as VR, AR, or MR.

However, in a process of actually wearing the head-mounted display devices, it is found that the head-mounted display devices have a display delay. Consequently, the users may suffer from dizziness when wearing the head-mounted display devices, which severely affects user experience.

### SUMMARY

This application provides a display method and an electronic device, to reduce a display delay, thereby avoiding that a user may suffer from dizziness when wearing a head-mounted display device, and improving comfort of the user wearing the head-mounted display device.

According to a first aspect, this application provides a display method, applied to an electronic device. The electronic device includes a first display, and the method includes: When the first display receives a first image, the first display displays a second image.

For example, the electronic device is a head-mounted display device.

In this embodiment of this application, a device that outputs the first image is referred to as a processing device. For example, the first image received by the first display may be an image output by a system on chip (system on chip, SoC), that is, the processing device is the SoC. It should be noted herein that specific forms of the SoC and the electronic device are not limited in this application. For example, in some embodiments, the SoC is included in the electronic device. For another example, in some embodiments, the SoC is not included in the electronic device. That is, the SoC and the electronic device are independent of each other.

Specifically, in this embodiment of this application, a resolution of the second image output by the first display is greater than a resolution of the first image.

Specifically, in this embodiment of this application, both the first image and the second image output by the first display include K areas. In this embodiment of this application, the K areas included in the first image are referred to as K first areas, and the K areas included in the second image output by the first display are referred to as K second areas.

For example, both the first image and the second image can be divided into nine (that is, K is 9) areas of three rows and three columns: a central area located at an image center, an upper left corner area located at an upper left corner of the central area, an upper transition area located above the central area, an upper right corner area located at an upper right corner of the central area, a left transition area located on a left side of the central area, a right transition area located on a right side of the central area, a lower left corner area located at a lower left corner of the central area, a lower transition area located below the central area, and a lower right corner area located at a lower right corner of the central area.

Specifically, different first areas in the K first areas correspond to different second areas in the K second areas, and a location of each first area in the first image is the same as a location of a corresponding second area in the second image. In other words, in this embodiment of this application, the K first areas one-to-one correspond to the K second areas, and a location of a first area in the first image is the same as a location of a corresponding second area in the second image. In other words, in this embodiment of this application, the first image and the second image output by the first display are aligned.

For example, if both the first image and the second image may be divided into nine (that is, K is 9) areas of three rows and three columns, it may be considered that: the upper left corner area in the first image corresponds to the upper left corner area in the second image, the upper transition area in the first image corresponds to the upper transition area in the second image, the upper right corner area in the first image corresponds to the upper right corner area in the second image, the left transition area in the first image corresponds to the left transition area in the second image, the central area in the first image corresponds to the central area in the second image, the right transition area in the first image corresponds to the right transition area in the second image, the lower left corner area in the first image corresponds to the lower left corner area in the second image, the lower transition area in the first image corresponds to the lower transition area in the second image, and the lower right corner area in the first image corresponds to the lower right corner area in the second image.

Specifically, in this embodiment of this application, a resolution of a first target area in the K first areas is the same as a resolution of a second target area in the K second areas, content of the first target area is the same as content of the second target area, and a resolution of each second area other than the second target area in the K second areas is greater than a resolution of a first area corresponding to the second area (for example, content of each second area other than the second target area in the K second areas is obtained by upsampling content of the first area corresponding to the second area).

In other words, in this embodiment of this application, the second image displayed on the first display includes the second target area, and content of the second target area is the same as content of the first target area in the first image output by the SoC, that is, the second target area displayed on the first display is obtained by not upsampling the content of the first target area, and the resolution of the original first target area is maintained.

It should be understood that, in the display method, the resolution of the first image is less than the resolution of the second image output by the first display, so that when a transmission bandwidth of the processing device (for example, the SoC) that outputs the first image is insufficient, display smoothness can be ensured. In addition, when the second image is displayed to a user on the first display, the second target area included in the second image is obtained by not upsampling the corresponding first target area in the SoC. Therefore, definition of the first target area can be ensured, and during specific implementation, the first target area is usually a gaze area of the user. In addition, in the display method provided in this embodiment of this application, because the first image output by the processing device and the second image output by the first display are aligned, there is no need to wait until data in the first target area is completely transmitted before displaying is performed. In this way, displaying is performed on the first display while data is transmitted, thereby reducing a display delay.

With reference to the first aspect, in some embodiments, each second area other than the second target area in the K second areas is obtained by upsampling the first area corresponding to the second area, and a second area that is in the K second areas and that is farther away from the second target area corresponds to a larger upsampling factor.

In other words, when the second image is displayed on the first display based on the first image, a larger upsampling factor is used to obtain, based on a corresponding first area, the second area that is in the K second areas and that is farther away from the second target area.

It may be understood that, in this implementation, when the second image is displayed on the first display based on the first image, a larger upsampling factor is used to upsample the first area that is in the K first areas and that is farther away from the first target area. Therefore, the K second areas displayed on the first display have the following features: A second area that is in the second image and that is farther away from the second target area is less clear, and a second area that is in the second image and that is closer to the second target area is clearer. That is, in this implementation, in the K second areas displayed on the first display, definition of second areas that are at different distances from the second target area is different.

It should be understood that, compared with a case in which the first target area and the corresponding second target area use a same resolution, and all other second areas use a same upsampling factor, the second image displayed in this manner better meets a viewing feature of the user. Therefore, user experience can be improved.

With reference to the first aspect, in some embodiments, the electronic device further includes a second display, and the method further includes: When the second display receives a third image, the second display displays a fourth image, where a resolution of the third image is less than a resolution of the fourth image, the third image includes K third areas, the fourth image includes K fourth areas, different third areas in the K third areas correspond to different fourth areas in the K fourth areas, and a location of each third area in the third image is the same as a location of a corresponding fourth area in the fourth image. The K third areas include a third target area, the K fourth areas include a fourth target area corresponding to the third target area, a resolution of the third target area is the same as a resolution of the fourth target area, and a resolution of each fourth area other than the fourth target area in the K fourth areas is greater than a resolution of a third area corresponding to the fourth area.

The solution may be similar to the display method of the first display in the first aspect. Details are not described herein again.

With reference to the first aspect, in some embodiments, both the first image and the second image can be divided into nine areas of three rows and three columns: the central area located at the image center, the upper left corner area located at the upper left corner of the central area, the upper transition area located above the central area, the upper right corner area located at the upper right corner of the central area, the left transition area located on the left side of the central area, the right transition area located on the right side of the central area, the lower left corner area located at the lower left corner of the central area, the lower transition area located below the central area, and the lower right corner area located at the lower right corner of the central area.

The first target area is the central area of the first image, the second target area is the central area of the second image, and that the resolution of the first target area is the same as the resolution of the second target area includes: A resolution of the central area of the second image is the same as a resolution of the central area of the first image.

With reference to the first aspect, in some embodiments, the upper left corner area in the second image is obtained by upsampling the upper left corner area in the first image by a factor of q1 in a horizontal direction and upsampling the upper left corner area in the first image by a factor of p1 in a vertical direction, the left transition area in the second image is obtained by upsampling the left transition area in the first image by a factor of q1 in the horizontal direction and not upsampling the left transition area in the first image in the vertical direction, and the upper transition area in the second image is obtained by not upsampling the upper transition area in the first image in the horizontal direction and upsampling the upper transition area in the first image by a factor of p1 in the vertical direction, where both q1 and p1 are greater than 1.

For example, when the resolution of the second image is 3840×3840, the upper left corner area in the second image is obtained by upsampling the upper left corner area in the first image by a factor of 2 in both the horizontal direction and the vertical direction, the left transition area in the second image is obtained by upsampling the left transition area in the first image by the factor of 2 in the horizontal direction and not upsampling the left transition area in the first image in the vertical direction, and the upper transition area in the second image is obtained by not upsampling the upper transition area in the first image in the horizontal direction and upsampling the upper transition area in the first image by the factor of 2 in the vertical direction.

According to a second aspect, this application provides a display apparatus, including a functional module configured to implement the method according to any one of the first aspect or the possible implementations of the first aspect.

According to a third aspect, this application provides a display apparatus, including a memory and a processor. The memory is configured to store program instructions. The processor is configured to execute the program instructions in the memory to implement the method according to any one of the first aspect or the possible implementations of the first aspect.

According to a fourth aspect, this application provides an electronic device, including one or more displays, one or more memories, and one or more processors. The one or more memories store one or more programs, and when the one or more processors execute the one or more programs, the electronic device is enabled to perform the method according to any one of the first aspect or the possible implementations of the first aspect.

According to a fifth aspect, this application provides a computer-readable storage medium, including computer instructions. When the computer instructions are run on an electronic device, the electronic device is enabled to perform the method according to any one of the first aspect or the possible implementations of the first aspect.

According to a sixth aspect, this application provides a computer program product. The computer program product includes instructions used to implement the method according to any one of the first aspect or the possible implementations of the first aspect.

It may be understood that, for effect that can be achieved in the second aspect, the third aspect, the fourth aspect, the fifth aspect, and the sixth aspect, refer to descriptions in the first aspect. Details are not described herein again.

### BRIEF DESCRIPTION OF DRAWINGS

FIG. 1 is a diagram of a structure of a terminal device according to an embodiment of this application;
FIG. 2 is a diagram of a structure of a VR system according to an embodiment of this application;
FIG. 3 is a diagram of a structure of a head-mounted device according to this application;
FIG. 4 is a diagram of a structure of another head-mounted device according to this application;
FIG. 5 is a diagram of a software structure used by a head-mounted device according to this application;
FIG. 6 is a diagram of an existing display method;
FIG. 7 is a diagram of another existing display method;
FIG. 8 is a diagram of an existing SoC transmission process and an existing display process of a display;
FIG. 9 is an example of a display method according to this application;
FIG. 10 is an example of a display method according to this application;
FIG. 11 is a diagram of an SoC transmission process and a display process of a display according to this application;
FIG. 12 is another example of a display method according to this application;
FIG. 13 is still another example of a display method according to this application;
FIG. 14 is yet another example of a display method according to this application; and
FIG. 15 is a diagram of a display apparatus according to an embodiment of this application.

### DESCRIPTION OF EMBODIMENTS

Example embodiments are described in detail herein, and examples of the example embodiments are presented in the accompanying drawings. When the following description relates to the accompanying drawings, unless specified otherwise, same numbers in different accompanying drawings represent the same element or similar elements. Implementations described in the following example embodiments do not represent all implementations consistent with this application. On the contrary, the implementations are merely examples of apparatuses and methods that are described in the appended claims in detail and that are consistent with some aspects of this application.

To clearly describe the technical solutions in embodiments of this application, terms such as "first" and "second" are used in embodiments of this application to distinguish between same items or similar items that provide basically same functions or purposes. Persons skilled in the art may understand that the terms "first" and "second" do not limit a quantity and an execution sequence, and the terms "first" and "second" do not indicate a definite difference.

It should be noted that in this application, the word such as "example" or "for example" represents giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

In addition, "at least one" means one or more, and "a plurality of" means two or more. "And/or" describes an association relationship between associated objects, and indicates that three relationships may exist. For example, A and/or B may indicate the following cases: A exists alone, both A and B exist, and B exists alone, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one item (piece) of a, b, and c may represent a, b, c, a and b, a and c, b and c, or a, b, and c, where a, b, and c may be single or plural.

A processing method of a terminal device provided in embodiments of this application may also be referred to as a method for identifying a third-party frame drawing thread, and may be applied to a terminal device having a display function. The terminal device may be a wearable terminal device such as a mobile phone, a tablet computer, a personal computer (personal computer, PC), a smart screen, a head unit device, or a smartwatch, or may be one of various teaching auxiliary tools (for example, a learning machine and an early education machine), a smart toy, a portable robot, a personal digital assistant (personal digital assistant, PDA), an augmented reality (augmented reality, AR) technology device, a virtual reality (virtual reality, VR) device, and the like, or may be a device having a mobile office function, a device having a smart home function, a device having an audio and video entertainment function, a device supporting intelligent travel, or the like. It should be understood that a specific technology and a specific device form used by the terminal device are not limited in embodiments of this application.

With the development of terminal display technologies, virtual reality (virtual reality, VR), augmented reality (augmented reality, AR), and mixed reality (mixed reality, MR) technologies are applied to more scenarios. Users can wear head-mounted display devices to experience different effect such as VR, AR, or MR.

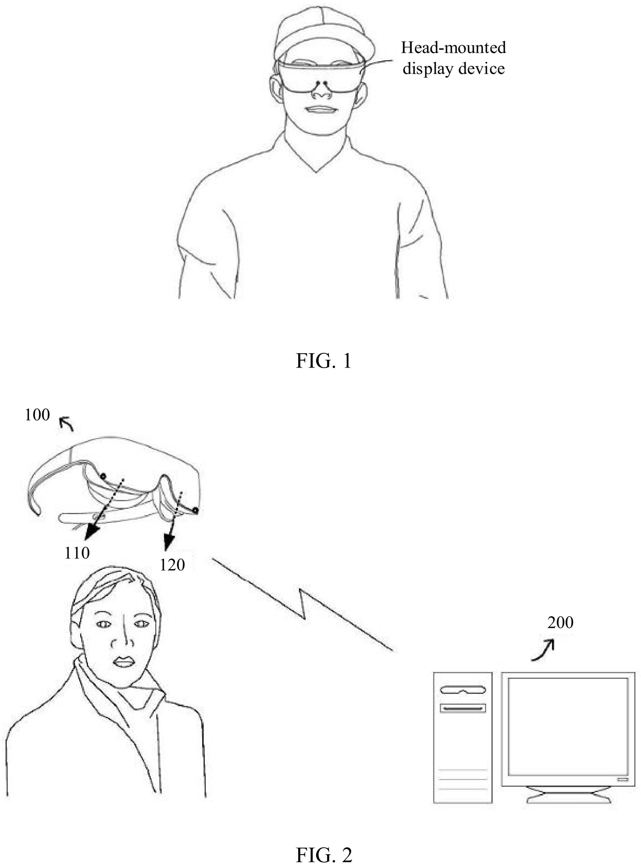

FIG. 1 is a diagram of an application scenario according to this application. As shown in FIG. 1, a user may wear a head-mounted display device on a head to watch content played on the head-mounted display device. For example, the user wearing a VR head-mounted display device (such as VR glasses or a VR helmet) can see a VR game interface, and can interact with the VR game interface through an operation such as a gesture or a handle, as if the user is in a game. For another example, the user wearing an AR transparent eyeglasses head-mounted display device can see a real surrounding environment through lenses of the glasses, and a virtual object may be further displayed on the lenses. In this way, the user can see both a real object and the virtual object.

The VR technology is a human-computer interaction means created by using computer and sensor technologies. The VR technology integrates various scientific and technological disciplines such as a computer graphics technology, a computer simulation technology, a sensor technology, and a display technology, and can create a virtual environment. The virtual environment includes a two-dimensional or three-dimensional virtual object that is generated by a computer and that is dynamically played in real time, and provides simulation of senses such as vision for users, making the users feel as if the users are physically in the environment. In addition, in addition to visual perception generated by using the computer graphics technology, perception such as auditory perception, tactile perception, force perception, and motion perception is further included, and even olfactory perception, taste perception, and the like are further included. This is also referred to as multi-perception. In addition, head rotation, an eye, a gesture, or another human body behavior action of the user may be further detected. The computer processes data that adapts to the action of the user, responds to the action of the user in real time, and separately provides feedback to sensory organs of the user, to form a virtual environment.

The AR technology is to superimpose a virtual object generated by a computer on a real-world scene, to enhance the real world. In other words, in the AR technology, the real-world scene needs to be captured, and then a virtual environment is superimposed on the real world. Therefore, a difference between the VR technology and the AR technology lies in that the VR technology creates a complete virtual environment, and the user sees only a virtual object; while the AR technology superimposes the virtual object on the real world, and both an object in the real world and the virtual object can be seen.

The MR technology introduces real-life scene information (or referred to as real-world scene information) into a virtual environment, to establish a bridge between the virtual environment, the real world, and a user for information exchange and feedback, thereby enhancing realism of user experience. Specifically, a real-life object is virtualized (for example, the real-life object is scanned by using a camera for three-dimensional reconstruction to generate a virtual object), and the virtualized real object is introduced into the virtual environment. In this way, the user can see the real object in the virtual environment.

For ease of understanding, the following describes the technical solutions of this application by using an example in which the user wears the VR head-mounted display device. However, it should be noted that the technical solutions provided in embodiments of this application are not limited to the VR head-mounted display device. For example, the technical solutions may be applied to VR, AR, or MR, or may be applied to another scene or electronic device in which a three-dimensional environment needs to be displayed to the user other than VR, AR, or MR. A specific type of the electronic device is not limited in embodiments of this application.

FIG. 2 is a diagram of a VR system for presenting VR effect to a user. As shown in FIG. 2, the VR system includes a VR head-mounted display device 100 and a processing device 200. The VR system may be referred to as a VR split machine. Specifically, the VR head-mounted display device 100 may be connected to the processing device 200. A connection between the VR head-mounted display device 100 and the processing device 200 includes a wired or wireless connection. The wireless connection may be Bluetooth (Bluetooth, BT), conventional Bluetooth or Bluetooth low energy BLE, a wireless local area network (wireless local area network, WLAN) (for example, a wireless fidelity (wireless fidelity, Wi-Fi) network), Zigbee, frequency modulation (frequency modulation, FM), a near field communication (near field communication, NFC) technology, an infrared (infrared, IR) technology, or a universal 2.4G/5G frequency band wireless communication connection.

The processing device 200 may perform processing calculation. For example, the processing device 200 may generate an image, process the image, and then send the processed image to the VR head-mounted display device 100 for display.

In some embodiments, a form of the processing device 200 may be, for example, a host (for example, a VR host) or a server (for example, a VR server). The VR host or the VR server may be a device having a high computing capability. For example, the VR host may be a device such as a mobile phone, a tablet computer, or a notebook computer, and the VR server may be a cloud server.

The VR head-mounted display device 100 includes a display, and the display of the VR head-mounted display device 100 may display an image to human eyes.

In some embodiments, the VR head-mounted display device 100 includes only one display, and two eyes of a user view an image on the display.

In some embodiments, two displays (for example, VR glasses) may be disposed on the VR head-mounted display device 100. For example, in the VR system shown in FIG. 2, a display 110 and a display 120 are wrapped inside the VR glasses. Therefore, arrows indicating the display 110 and the display 120 in FIG. 2 are represented by dashed lines.

Optionally, the VR head-mounted display device 100 further has functions such as image generation and processing, that is, the VR head-mounted display device 100 does not need the processing device 200 in FIG. 1. Such a VR head-mounted display device 100 may be referred to as an all-in-one VR machine.

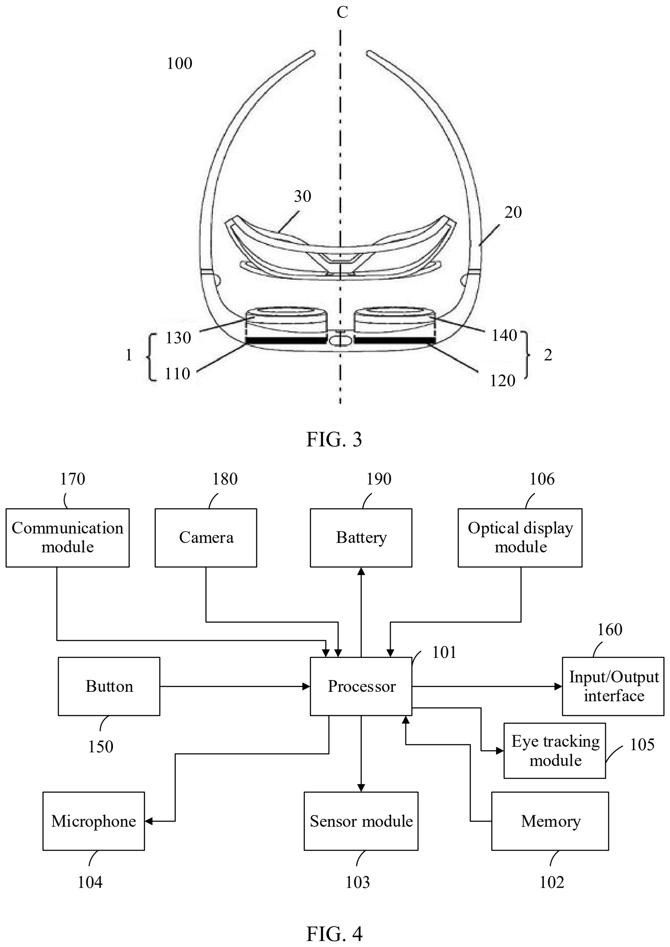

FIG. 3 is a diagram of a VR head-mounted display device 100 including two displays. As shown in FIG. 3, the VR head-mounted display device 100 includes a display module 1 and a display module 2.

The display module 1 is configured to display an image to a right eye of a user. The display module 1 includes a display 110 and an optical device 130. The display 110 is located on a side that is of the optical device 130 and that is away from the right eye. The display module 2 is configured to display an image to a left eye of the user. The display module 2 includes a display 120 and an optical device 140. The display 120 is located on a side that is of the optical device 140 and that is away from the left eye.

Specifically, in a scene in which the user wears the VR head-mounted display device 100, when the display 110 displays an image, light emitted by the display 110 is converged to the right eye of the user through the optical device 330; and when the display 120 displays an image, light emitted by the display 120 is converged to the left eye of the user through the optical device 140.

It should be noted that the VR head-mounted display device 100 shown in FIG. 3 may further include another component, for example, further includes a support part 30 and a support 20. The support part 30 is configured to support the VR head-mounted display device on a nose bridge, and the support 20 is configured to support the VR head-mounted display device on two ears, to ensure stable wearing of the VR head-mounted display device.

Optionally, in some embodiments, the optical device 130 or the optical device 140 may be one or more optical devices of a reflector, a transmissive lens, or an optical waveguide, and may also improve a field of view. For example, the optical device 130 or the optical device 140 may be an eyepiece including a plurality of transmissive lenses. For example, the optical device may be a Fresnel lens and/or an aspheric lens. This is not limited in embodiments of this application. Generally, the optical device 130 and the optical device 140 are respectively aligned with two eyes of the user.

Optionally, in some embodiments, the optical device 130 and the optical device 140 are symmetrical relative to an intermediate plane C. The symmetry may be, for example, strict symmetry, or there may be a slight deviation. For example, the optical device 130 and the optical device 140 may be strictly symmetrical relative to the intermediate plane C, or the optical device 130 and the optical device 140 may be basically symmetrical relative to the intermediate plane C. The basic symmetry may have a specific deviation, and the deviation is within a small range. Optionally, in some embodiments, the VR head-mounted display device 100 may be of a left-right symmetrical structure, and the support part 30 and/or the support 20 may be left-right symmetrical relative to the intermediate plane C. The support part 30 may fasten a location of a human face, to help the optical device 130 and the optical device 140 respectively align with the left eye and the right eye of the user.

It may be understood that the VR head-mounted display device 100 may further include more components. FIG. 4 is a diagram of a structure of a head-mounted display device 100 according to an embodiment of this application. The head-mounted display device may be a VR head-mounted display device, an AR head-mounted display device, an MR head-mounted display device, or the like. The VR head-mounted display device is used as an example. As shown in FIG. 4, the VR head-mounted display device 100 may include a processor 101, a memory 102, a sensor module 103 (which may be, for example, configured to obtain a posture of a user), a microphone 104, a button 150, an input/output interface 160, a communication module 170, a camera 180, a battery 190, an optical display module 106, an eye tracking module 105, and the like.

The processor 101 is usually configured to control an overall operation of the VR head-mounted display device 100, and may include one or more processing units. For example, the processor 101 may include an application processor (application processor, AP), a modem processor, a graphics processing unit (graphics processing unit, GPU), an image signal processor (image signal processor, ISP), a video processing unit (video processing unit, VPU) controller, a memory, a video codec, a digital signal processor (digital signal processor, DSP), a baseband processor, a neural network processing unit (neural-network processing unit, NPU), and/or the like. Different processing units may be independent components, or may be integrated into one or more processors.

The memory may be further disposed in the processor 101, and is configured to store instructions and data. In some embodiments, the memory in the processor 101 is a cache. The memory may store instructions or data just used or cyclically used by the processor 101. If the processor 101 needs to use the instructions or the data again, the processor 101 may directly invoke the instructions or the data from the memory. This avoids repeated access and reduces waiting time of the processor 101, thereby improving system efficiency.

In some embodiments of this application, the processor 101 may be configured to control focal power of the VR head-mounted display device 100. For example, the processor 101 may be configured to control focal power of the optical display module 106, to adjust the focal power of the head-mounted display device 100. For example, the processor 101 may adjust relative locations of optical devices (such as lenses) in the optical display module 106, to adjust the focal power of the optical display module 106, so that when the optical display module 106 performs imaging toward human eyes, a location of a corresponding virtual image plane may be adjusted. In this way, the focal power of the head-mounted display device 100 can be controlled.

In some embodiments, the processor 101 may include one or more interfaces. The interfaces may include an inter-integrated circuit (inter-integrated circuit, I2C) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface, a serial peripheral interface (serial peripheral interface, SPI), and the like.

The I2C interface is a bidirectional synchronous serial bus and includes a serial data line (serial data line, SDA) and a serial clock line (serial clock line, SCL). In some embodiments, the processor 101 may include a plurality of groups of I2C buses.

The UART interface is a universal serial data bus, and is configured to perform asynchronous communication. The bus may be a bidirectional communication bus. The bus converts to-be-transmitted data between serial communication and parallel communication. In some embodiments, the UART interface is generally configured to connect the processor 101 and the communication module 170. For example, the processor 101 communicates with a Bluetooth module in the communication module 170 through the UART interface, to implement a Bluetooth function.

The MIPI interface may be configured to connect the processor 101 to peripheral components such as a display in the optical display module 106 and a camera 180.

The GPIO interface may be configured by software. The GPIO interface may be configured as a control signal or a data signal. In some embodiments, the GPIO interface may be configured to connect the processor 101 to the camera 180, the display in the optical display module 106, the communication module 170, the sensor module 103, the microphone 104, and the like. The GPIO interface may alternatively be configured as an I2C interface, an I2S interface, a UART interface, an MIPI interface, or the like. In some embodiments, the camera 180 may capture an image including a real object, and the processor 101 may fuse the image captured by the camera with a virtual object, and display an image obtained through fusion through the optical display module 106. In some embodiments, the camera 180 may further capture an image including a human eye. The processor 101 performs eye tracking through the image.

The USB interface is an interface that conforms to a USB standard specification, and may be specifically a mini USB interface, a micro USB interface, a USB type-C interface, or the like. The USB interface may be configured to connect to a charger to charge the VR head-mounted display device 100, or may be configured to transmit data between the VR head-mounted display device 100 and a peripheral device, or may be configured to connect to a headset for playing audio via the headset. The interface may be further configured to connect to another electronic device, for example, a mobile phone, or the like. The USB interface may be a USB 3.0 interface, is configured to be compatible with high-speed display port (display port, DP) signal transmission, and may be configured to transmit high-speed audio and video data.

It may be understood that an interface connection relationship between the modules shown in this embodiment of this application is merely an example for description, and does not constitute a limitation on the structure of the head-mounted display device 100. In some other embodiments of this specification, the head-mounted display device 100 may alternatively use an interface connection manner different from that in the foregoing embodiment, or use a combination of a plurality of interface connection manners.

In addition, the VR head-mounted display device 100 may include a wireless communication function. For example, the VR head-mounted display device 100 may receive an image from another electronic device (for example, a VR host) for display, or the VR head-mounted display device 100 may directly obtain data from a station such as a base station. The communication module 170 may include a wireless communication module and a mobile communication module. A wireless communication function may be implemented by using an antenna (not shown), the mobile communication module (not shown), a modem processor (not shown), a baseband processor (not shown), and the like. The antenna is configured to transmit/receive an electromagnetic wave signal. The VR head-mounted display device 100 may include a plurality of antennas, and each antenna may be configured to cover one or more communication frequency bands. Different antennas may be further reused, to improve antenna utilization. For example, an antenna 1 may be reused as a diversity antenna of a wireless local area network. In some other embodiments, the antenna may be used in combination with a tuning switch.

The mobile communication module may provide a solution that can be applied to the VR head-mounted display device 100 and that is used for wireless communication including a 2nd generation (2nd generation, 2G) network/3rd generation (3rd generation, 3G) network/4th generation (4th generation, 4G) network/5th generation (5th generation, 5G) network/6th generation (6th generation, 6G) network. The mobile communication module may include at least one filter, a switch, a power amplifier, a low noise amplifier (low noise amplifier, LNA), and the like. The mobile communication module may receive an electromagnetic wave through the antenna, perform processing such as filtering and amplification on the received electromagnetic wave, and send the processed electromagnetic wave to the modem processor for demodulation. The mobile communication module may further amplify a signal modulated by the modem processor, and convert the signal into an electromagnetic wave for radiation through the antenna. In some embodiments, at least some functional modules of the mobile communication module may be disposed in the processor 101. In some embodiments, at least some functional modules of the mobile communication module and at least some modules of the processor 101 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (not limited to a speaker or the like), or displays an image or a video through the display in the optical display module 106. In some embodiments, the modem processor may be an independent component. In some other embodiments, the modem processor may be independent of the processor 101, and is disposed in a same device as the mobile communication module or another functional module.

The wireless communication module may provide a solution that is applied to the VR head-mounted display device 100 and that is used for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module may be one or more components that integrate at least one communication processor module. The wireless communication module receives an electromagnetic wave through the antenna, performs frequency modulation and filtering processing on an electromagnetic wave signal, and sends the processed signal to the processor 101. The wireless communication module may further receive a to-be-sent signal from the processor 101, perform frequency modulation and amplification on the to-be-sent signal, and convert the to-be-sent signal into an electromagnetic wave for radiation through the antenna.

In some embodiments, the antenna and the mobile communication module of the VR head-mounted display device 100 are coupled to each other, so that the VR head-mounted display device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), 5G, 6G, BT, a GNSS, a WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite-based augmentation system (satellite-based augmentation system, SBAS).

The VR head-mounted display device 100 implements a display function by using the GPU, the optical display module 106, the application processor, and the like. The GPU is a microprocessor for image processing, and is connected to the optical display module 106 and the application processor. The GPU is configured to: perform mathematical and geometric calculation, and render an image. The processor 101 may include one or more GPUs that execute program instructions to generate or change display information.

The memory 102 may be configured to store computer-executable program code. The executable program code includes instructions. The processor 101 executes various functional applications of the VR head-mounted display device 100 and data processing by running the instructions stored in the memory 102. The memory 102 may include a program storage region and a data storage region. The program storage region may store an operating system, an application required by at least one function (for example, a voice playing function or an image playing function), and the like. The data storage region may store data (such as audio data and an address book) and the like created during use of the head-mounted display device 100. In addition, the memory 102 may include a high-speed random access memory, and may further include a nonvolatile memory, for example, at least one magnetic disk storage device, a flash memory, a universal flash storage (universal flash storage, UFS), and the like.

The VR head-mounted display device 100 may implement an audio function, for example, music playing and recording, by using an audio module, a speaker, the microphone 104, a headset jack, the application processor, and the like. The audio module is configured to convert digital audio information into an analog audio signal for outputting, and is further configured to convert analog audio input into a digital audio signal. The audio module may be configured to encode/decode an audio signal. In some embodiments, the audio module may be disposed in the processor 101, or some functional modules of the audio module are disposed in the processor 101. The speaker, also referred to as a "loudspeaker", is configured to convert an audio electrical signal into a sound signal. The head-mounted display device 100 may be used to listen to music or answer a hands-free call via the speaker.

The microphone 104, also referred to as a "mike" or a "mic", is configured to convert a sound signal into an electrical signal. At least one microphone 104 may be disposed in the VR head-mounted display device 100. In some other embodiments, two microphones 104 may be disposed in the VR head-mounted display device 100, to capture a sound signal, and further implement a noise reduction function. In some other embodiments, three, four, or more microphones 104 may be disposed in the VR head-mounted display device 100, to capture a sound signal and reduce noise, and further identify a sound source to implement a directional recording function and the like.

The headset jack is configured to connect to a wired headset. The headset jack may be a USB interface, or may be a 3.5 millimeters (mm) open mobile head-mounted display device platform (open mobile terminal platform, OMTP) standard interface, or a cellular telecommunications industry association of the USA (cellular telecommunications industry association of the USA, CTIA) standard interface.

In some embodiments, the VR head-mounted display device 100 may include one or more buttons 150, and these buttons may control the VR head-mounted display device, and provide a function of interacting with the VR head-mounted display device 100 for the user. The button 150 may be in a form of a button, a switch, a dial, and a touch or proximity touch sensing device (for example, a touch sensor). Specifically, for example, the user may start the optical display module 106 of the VR head-mounted display device 100 by pressing the button. The button 150 includes a power button, a volume button, and the like. The button 150 may be a mechanical button or a touch button. The head-mounted display device 100 may receive button input, and generate button signal input related to user settings and function control of the head-mounted display device 100.

In some embodiments, the VR head-mounted display device 100 may include the input/output interface 160, and the input/output interface 160 may connect another apparatus to the VR head-mounted display device 100 via an appropriate component. The component may include, for example, an audio/video jack, a data connector, and the like.

The optical display module 106 is configured to present an image to the user under control of the processor 101. The optical display module 106 may convert, by using one or more optical devices of a reflector, a transmissive lens, an optical waveguide, or the like, real pixel image display into near-eye projected virtual image display, to implement virtual interaction experience or implement interaction experience combining virtual and reality. For example, the optical display module 106 receives image data information sent by the processor 101, and presents a corresponding image to the user.

For example, for the optical display module 106, refer to the structure shown in FIG. 3. For example, the optical display module 106 includes two displays: the display 110 and the display 120. For another example, the optical display module 106 includes the display module 1 and the display module 2, the display module 1 includes the display 110 and the optical device 130, and the display module 2 includes the display 120 and the optical device 140.

In some embodiments, the VR head-mounted display device 100 may further include the eye tracking module 105, and the eye tracking module 105 is configured to track movement of a human eye, to determine a point-of-gaze of the human eye, for example, may locate, by using an image processing technology, a pupil location, and obtain pupil center coordinates, to calculate the point-of-gaze of a person. In some embodiments, the eye tracking system may determine a location of the point-of-gaze of the user (or determine a line-of-sight direction of the user) by using a method such as a video eye pattern method, a photodiode response method, or a pupil corneal reflection method, to implement eye tracking on the user.

It should be noted that, in some embodiments, respective corresponding eye tracking systems may be separately disposed for the two eyes of the user, to synchronously or asynchronously perform eye tracking on the two eyes. In some other embodiments, an eye tracking system may be disposed only near a single eye of the user, a line-of-sight direction corresponding to the human eye is obtained by using the eye tracking system, and a line-of-sight direction or a location of a point-of-gaze of the other eye of the user may be determined based on a relationship between the points-of-gaze of the two eyes (for example, when the user observes an object with the two eyes, locations of the points-of-gaze of the two eyes are usually close or the same) and a spacing between the two eyes of the user.

It may be understood that the structure shown in this embodiment of this application does not constitute a specific limitation on the VR head-mounted display device 100. In some other embodiments of this specification, the VR head-mounted display device 100 may include more or fewer components than those in FIG. 4, or combine some components, or split some components, or have different component arrangements. This is not limited in embodiments of this application.

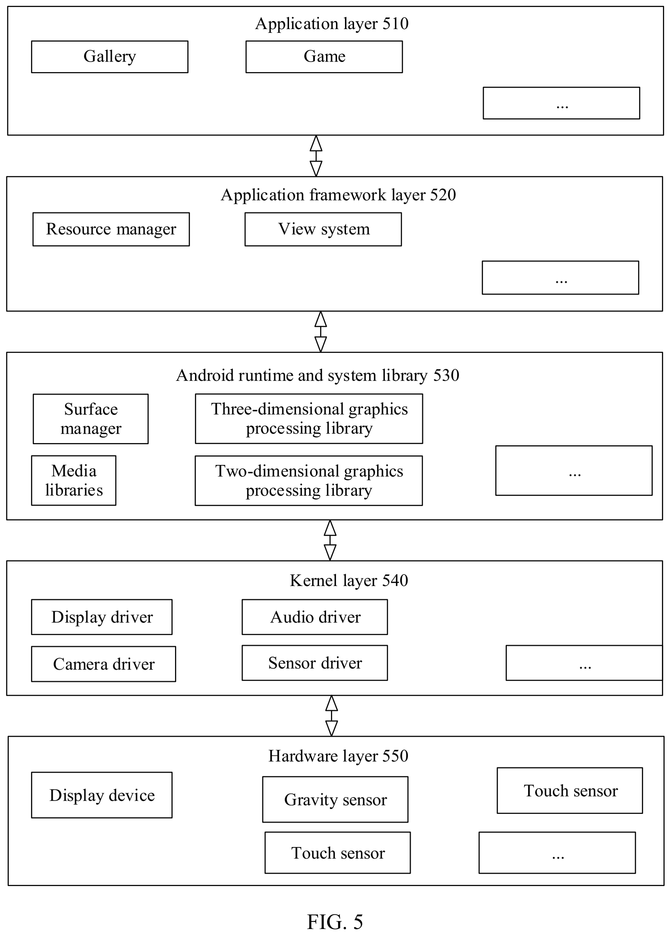

FIG. 5 is a block diagram of a software structure of a VR head-mounted display device 100 according to an embodiment of this application. As shown in FIG. 5, the software structure of the VR head-mounted display device 100 may be a layered architecture. For example, software may be divided into several layers, and each layer has a clear role and task. The layers communicate with each other through a software interface. In some embodiments, there are five layers: an application layer 510, an application framework (framework, FWK) layer 520, an Android runtime (Android runtime) and system library 530, a kernel layer 540, and a hardware layer 550 from top to bottom.

The application layer 510 may include a series of application packages. For example, as shown in FIG. 5, the application layer includes a gallery application, a game application, and the like.

The application framework layer 520 provides an application programming interface (application programming interface, API) and a programming framework for the applications in the application layer. The application framework layer may include some predefined functions. As shown in FIG. 5, the application framework layer may include a resource manager, a view system, and the like. For example, the view system includes visual controls, for example, a control for text display and a control for picture display. The view system may be configured to construct an application. A display interface may include one or more views. For example, a display interface including a message notification icon may include a text display view and an image display view. The resource manager provides the applications with various resources such as a localized character string, an icon, a picture, a layout file, and a video file.

An Android runtime (Android runtime) includes a core library and a virtual machine. The Android runtime is responsible for scheduling and managing an Android system. The core library includes two parts: a function that needs to be invoked in Java language and a kernel library of Android. The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

A system library may include a plurality of functional modules, for example, a surface manager (surface manager) , media libraries (media libraries), a three-dimensional graphics processing library such as OpenGL ES, and a two-dimensional graphics engine such as SGL. The surface manager is configured to: manage a display subsystem, and provide fusion of 2D and 3D layers for a plurality of applications. The media libraries support playback and recording in a plurality of commonly used audio and video formats, and static image files. The media libraries may support a plurality of audio and video coding formats such as MPEG-4, H.264, MP3, AAC, AMR, JPG, and PNG. The three-dimensional graphics processing library is configured to implement three-dimensional graphics drawing, image rendering, compositing, layer processing, and the like. The two-dimensional graphics engine is a drawing engine for two-dimensional drawing.

The kernel layer 540 is a layer between hardware and software. The kernel layer 540 includes at least a display driver, a camera driver, an audio driver, a sensor driver, and the like.

The hardware layer may include a display and various sensor modules, such as an acceleration sensor, a gravity sensor, and a touch sensor.

It may be understood that the software structure shown in FIG. 5 does not constitute a specific limitation on the software structure of the VR head-mounted display device 100. For example, in some other embodiments, the software structure of the VR head-mounted display device 100 may include more or fewer layers than those in FIG. 5, for example, further includes an adaptation layer. The adaptation layer is located between the application framework layer 520 and the Android runtime and system library 530, and is configured to implement adaptation between an upper layer (that is, the application framework layer) and a lower layer (that is, the system library), for example, implement interface matching between the upper layer and the lower layer, to ensure that data communication can be performed between the upper layer and the lower layer.

It can be learned from the foregoing description that, when displaying an image on the display, the head-mounted display device needs to first receive image data sent by the processing device. Alternatively, it may be expressed as follows: When the head-mounted display device displays the image to the user through the display, the head-mounted display device needs to be driven by the processing device.

In some embodiments, the display is included in the head-mounted device, and the processing device and the head-mounted display device are separately deployed, as shown in FIG. 2.

In some embodiments, both the processing device and the display are integrated into the head-mounted display device. In this case, the head-mounted display device may also be referred to as an all-in-one machine.

Generally, the head-mounted display device has a high display requirement, which is mainly reflected in the following three aspects: (1) a high resolution; (2) a large field of view (field of view, FoV); and (3) a high refresh rate and a low delay.

The resolution is a resolution of an image output by each display.

The refresh rate is a quantity of times that a picture on the display is refreshed per second, is also referred to as an output frame rate, and is usually in a unit of hertz (Hz).

For example, for a head-mounted display device, an indicator (also referred to as an output capability) of the head-mounted display device during display is 1800×1920×2@90 Hz, indicating that when displaying is performed on a single display, an image resolution is 1800×1920 and a refresh rate is 90 Hz (that is, 90 frames are output per second).

In some embodiments, a silicon-based organic light-emitting diode (organic light-emitting diode, OLED) can achieve integration of a compact, lightweight, and thin appearance size with a high resolution due to an ultra-high PPI (pixels per inch) feature, and also has advantages such as a high color gamut and high brightness. Therefore, a high resolution can be achieved by using the silicon-based OLED for display. For example, when displaying is performed by using the silicon-based OLED, each block can reach a resolution of 4K.

However, development of a processing device that drives a display is slower than that of the display. This is mainly reflected in an insufficient transmission bandwidth of the processing device. Consequently, display effect of the display cannot be fully exerted.

In some embodiments, the processing device is a system on chip (system on chip, SoC).

For example, if an output capability of each display is 3840×3840@90 Hz, it indicates that a resolution of an image output by each display is 3840×3840 and a refresh rate is 90 Hz (that is, 90 frames of images can be output per second). In this case, if each display needs to achieve best display effect, a bandwidth required by each display to perform displaying is 3840×3840×90 Hz×24 bits/(1024^3)=29.66 Gbps. However, if a maximum transmission bandwidth that can be supported by the SoC is 17 Gbps/panel, the SoC cannot transmit an image of 3840×3840×90 Hz to the display because the transmission bandwidth of the SoC cannot meet the requirement of the display.

Currently, when the transmission bandwidth of the SoC cannot meet the requirement of the display, there are two common display solutions.

A first common display solution is as follows: When a refresh rate is ensured to remain unchanged, a resolution of an image output by the SoC is less than a resolution of an image output by each display, to ensure the maximum transmission bandwidth that can be supported by the SoC; and then, the head-mounted display device upsamples the image transmitted by the SoC, to obtain an image whose resolution is the same as that of the display.

In some embodiments, upsampling performed by the head-mounted display device on the image transmitted by the SoC may be performed by a display driver IC (display driver IC, DDIC) in the head-mounted display device.

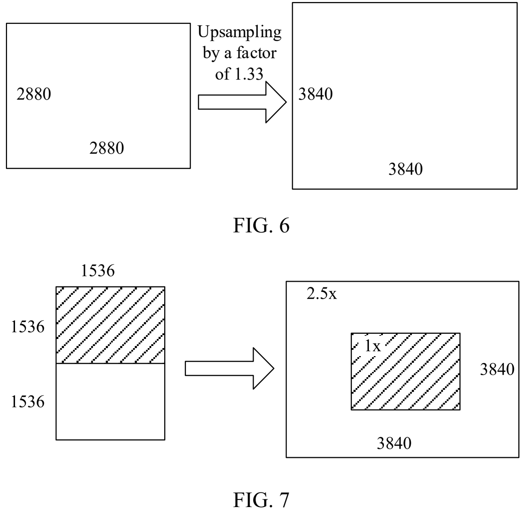

For example, the maximum transmission bandwidth that can be supported by the SoC is 17 Gbps/panel, and the output capability of each display is 3840×3840@90 Hz. When a transmission bandwidth of the SoC is less than 17 Gbps/panel, as shown in FIG. 6, the SoC may output an image of 2880×2880@90 Hz to the display, and then the DDIC upsamples the image by a factor of 1.33, to display an image of 3840×3840 on the display.

It should be noted herein that 2880×2880 in FIG. 6 is merely an example, and does not constitute a limitation on this application.

For example, in some embodiments, the resolution of the image output by the SoC may be x1×x1, provided that x1×x1×90 Hz×24 bits/(1024^3) is less than or equal to 17 Gbps. Correspondingly, the DDIC upsamples the image transmitted by the SoC by a factor of 3840/x1 in both a horizontal direction and a vertical direction, to display an image of 3840×3840 on the display.

For example, in some embodiments, the resolution of the image output by the SoC may be x1×y1, provided that x1×y1×90 Hz×24 bits/(1024^3) is less than or equal to 17 Gbps. Correspondingly, after receiving the image transmitted by the SoC, the DDIC upsamples the image by a factor of 3840/x1 in a horizontal direction and upsamples the image by a factor of 3840/y1 in a vertical direction, to display an image of 3840×3840 on the display.

A second common display solution is to reduce a refresh rate of the SoC, that is, reduce a frequency of outputting an image by the SoC. For example, when a transmission bandwidth of the SoC is less than 17 Gbps/panel, the SoC may output an image of 3840×3840@50 Hz to each display. Correspondingly, each display outputs 50 frames of images per second.

Similarly, the number 50 in this example is merely an example, and does not constitute a limitation on this application. For example, in some embodiments, the output frame rate of the SoC may be z1, provided that 3840×3840×z1×24 bits/(1024^3) is less than or equal to 17 Gbps.

It should be understood that the first manner results in a decrease in definition of the image output by each display, and the second implementation results in reduced smoothness during display.

In view of this, persons skilled in the art provide another display solution, which is also referred to as a point-of-gaze rendering solution. A basic idea of the solution is as follows: Because an FOV of a human eye is very small, for example, ranges from 20 degrees to 30 degrees, the display solution includes: An image output by an SoC includes two parts that are stacked and spliced, where an upper part is a gaze area part that needs to be displayed on a display, and a lower part is a background area part that needs to be displayed on the display, and then the image is transmitted to the display; and correspondingly, when performing displaying on the display, a head-mounted display device does not upsample the gaze area part, but upsamples the background area part, identifies a coordinate location of the gaze area part on the display by using a human eye tracking technology, and displays the gaze area part at the corresponding coordinate location to ensure definition of the gaze area.

It can be learned that, in the display solution, a resolution of the image output by the SoC is reduced to ensure a transmission bandwidth of the SoC, and ensure that the definition of the gaze area part and a refresh rate are not affected.

In an example, as shown in FIG. 7, the image output by the SoC includes two parts: an upper part and a lower part. The upper part is a gaze area part, and the lower part is a background area part. A resolution of the gaze area part is 1536×1536, and a resolution of the background area part is also 1536×1536. Then, the SoC transmits the image in a transmission sequence from top to bottom. Correspondingly, when displaying is performed on the display, after a specified location of the gaze area part on the display is identified by using the human eye tracking technology (the gaze area is located at a central location on the display in the example in FIG. 7), the gaze area part is not upsampled, the gaze area part is displayed at the specified location, and the background area part is upsampled by a factor of 2.5. That is, when displaying is performed on the display, a resolution of the gaze area part is still 1536×1536, ensuring the definition of the gaze area part.

It should be noted herein that the 1536×1536 resolutions of the gaze area part and the background area part in the image output by the SoC in FIG. 7 are merely examples, and do not constitute a limitation. For example, it is assumed that a maximum output frame rate of the display is z2 Hz, and a maximum bandwidth that can be supported by the SoC is S Gbps/panel. In this case, resolutions of the gaze area part and the background area part in the image output by the SoC may be x2×x2, provided that x2×2x2×z2×24 bits/(1024^3) is less than or equal to S Gbps/panel. Then, when an image is transmitted to the display for display and the display upsamples the background area part, an upsampling factor in a horizontal direction and an upsampling factor in a vertical direction are changed to 3840/x2.

However, in a process of wearing and using the head-mounted display device using the foregoing point-of-gaze rendering solution, it is found that the user may suffer from dizziness when wearing the head-mounted display device, which severely affects user experience.

It is found through analysis that a reason why the user may suffer from dizziness when wearing the head-mounted display device is as follows: In the foregoing point-of-gaze rendering solution, when the head-mounted display device displays each frame of image, the head-mounted display device starts to determine whether data in the gaze area or data in the background area part is displayed on each pixel of the display only after the SoC completely transmits the data in the gaze area part and starts to transmit the data in the background area part, to start to perform displaying row by row. That is, in the foregoing point-of-gaze rendering solution, displaying can start to be performed on the display only after the data in the gaze area part is completely transmitted. As a result, a fixed display delay is generated when each frame of image is displayed, and the user may suffer from dizziness when wearing the head-mounted display device.

For example, FIG. 7 is used as an example. A delay required for completely transmitting the data in the gaze area part is 1/2.5=0.4 frames. If a refresh rate of the display is 90 Hz, that is, time required for displaying one frame of image is 11.1 ms, a display delay of each frame is 4.4 ms (11.1×0.4). As a result, the user may suffer from dizziness when wearing the head-mounted display device.

It should be understood that, in this solution, a larger resolution of the gaze area part in the image output by the SoC indicates a larger display delay of the entire device.

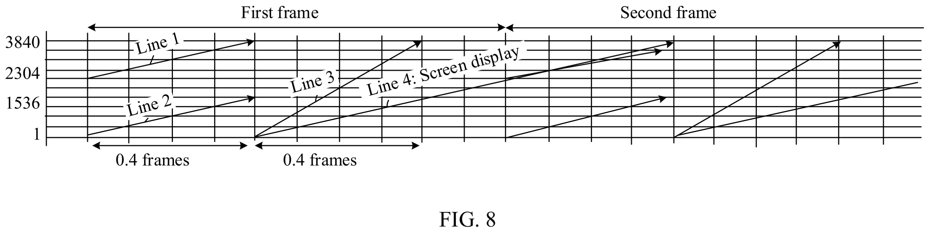

For ease of understanding, FIG. 8 is a diagram of an SoC transmission process and a screen display process in a scene in which resolutions of the gaze area part and the background area part in the image output by the SoC are 1536×1536 and a resolution of the image output by the display is 3840×3840. As shown in FIG. 8, a horizontal axis represents time, a vertical coordinate represents a quantity of screen rows on the display, a line 1 represents a value range of a pixel that is of the gaze area part and that is at the top of the display, and a line 2 represents a value range of a pixel that is of the gaze area part and that is at the bottom of the display. It takes 0.4 frames to transmit the data in the gaze area part of each frame of image. After completely transmitting the data in the gaze area part, the SoC starts to transmit the data in the background area part (represented by a line 3 in the figure). Corresponding, the display of the head-mounted display device starts to perform displaying row by row (represented by a line 4 in the figure).

In view of this, an embodiment of this application provides a display method, to ensure definition of a gaze area part and smoothness when a head-mounted display device performs displaying on a display, and further reduce a display delay of the entire device, thereby avoiding that a user may suffer from dizziness when wearing the head-mounted display device, and improving user experience.

The following first describes, with reference to an example, a display solution provided in this embodiment of this application.

In this example, an example in which a common output capability of a display is 3840×3840×90 Hz and a maximum transmission bandwidth that can be supported by an SoC is 17 Gbps/panel is still used for description.

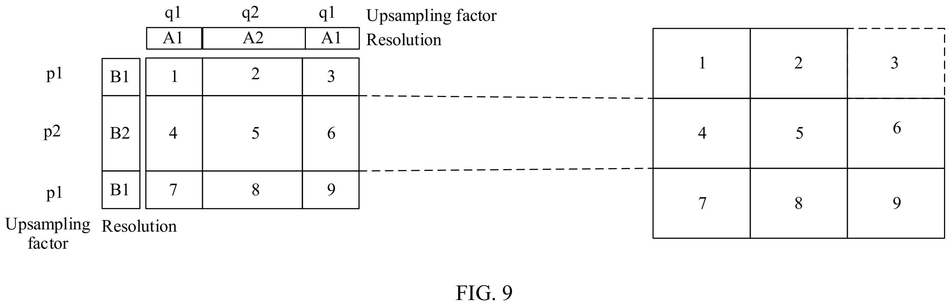

Specifically, an idea of the display method provided in this embodiment of this application is as follows: An image output by the SoC is aligned with an image output by the display. For example, as shown in FIG. 9, the image may be divided, based on a requirement of the user for display definition of the entire device, into the following areas: an area 5, an area 1 located at an upper left corner of the area 5, an area 2 located above the area 5, an area 3 located at an upper right corner of the area 5, an area 4 located on the left side of the area 5, an area 6 located on the right side of the area 5, an area 7 located at a lower left corner of the area 5, an area 8 located below the area 5, and an area 9 located at a lower right corner of the area 5. In this case, both the image output by the SoC and the image output by the display include the foregoing nine areas, and for a same area, a location of the area in the image output by the SoC is the same as a location of the area in the image output by the display. For example, a location of the area 5 included in the image output by the SoC is the same as a location of the area 5 included in the image output by the display, and both the area 1 included in the image output by the SoC and the area 1 included in the image output by the display are located at an upper left corner area of the respective area 5.

The area 5 may be a central area. The area 1, the area 3, the area 7, and the area 9 may be corner areas. The area 2, the area 4, the area 6, and the area 8 may be transition areas. In this case, the area 5 may be referred to as a central area 5; the area 1, the area 3, the area 7, and the area 9 may be respectively referred to as an upper left corner area 1, an upper right corner area 3, a lower left corner area 7, and a lower right corner area 9; and the area 2, the area 4, the area 6, and the area 8 may be transition areas and may be respectively referred to as an upper transition area 2, a left transition area 4, a right transition area 6, and a lower transition area 8.

Specifically, in this embodiment of this application, the image (that is, may be considered as a first image) output by the SoC is shown in FIG. 9. A resolution of the area 5 is A2×B2, resolutions of the area 1, the area 3, the area 7, and the area 9 are A1×B1, resolutions of the area 4 and the area 6 are A1×B2, and resolutions of the area 2 and the area 8 are A2×B1. A1+A2+A1=m, B1+B2+B1=n, m represents a resolution of the first image output by the SoC in a horizontal direction, and n represents a resolution of the image output by the SoC in a vertical direction.

It should be noted herein that, in this embodiment of this application, values of m and n are not limited, provided that the values can ensure the transmission bandwidth of the SoC to be less than 17 Gbps/panel. That is, the values of m and n need to satisfy: m×n×90×24 bits/(1024^3) is less than or equal to 17 Gbps.

Specifically, in this embodiment of this application, when the image transmitted by the SoC needs to be displayed on the display, at least one area in the image transmitted by the SoC needs to be upsampled, so that an image of 3840×3840 (that is, may be considered as a second image) is displayed on the display.

It should be noted herein that a specific used upsampling factor is not limited in this embodiment of this application, provided that the upsampling factor satisfies A1×q1+A2×q2+A1×q1=3840 and B1×p1+B2×p2+B1×p1=3840. q1 is an upsampling factor used to upsample the area 1, the area 4, the area 7, the area 3, the area 6, and the area 9 in the image transmitted by the SoC in a horizontal direction. q2 is an upsampling factor used to upsample the area 2, the area 5, and the area 8 in the image transmitted by the SoC in the horizontal direction. p1 is an upsampling factor used to upsample the area 1, the area 2, the area 3, the area 7, the area 8, and the area 9 in the image transmitted by the SoC in a vertical direction. p2 is an upsampling factor used to upsample the area 4, the area 5, and the area 6 in the image transmitted by the SoC in the vertical direction.

In this embodiment of this application, when the image transmitted by the SoC is displayed on the display, a gaze area in the image transmitted by the SoC may not be upsampled, to ensure definition of the gaze area.

For example, if the gaze area in FIG. 9 is the area 5, values of q2 and p2 may be set to 1, to ensure definition of the area 5 when displaying is performed on the display.

In some embodiments, when an area other than the gaze area in the image transmitted by the SoC is upsampled on the display, a larger upsampling factor is used to upsample an area farther away from the gaze area.

FIG. 9 is still used as an example. In an example, it is assumed that the gaze area is the area 5. In this case, a value of q1 may be set to 2, a value of q2 may be set to 1, a value of p1 may be set to 2, and a value of p2 may be set to 1.

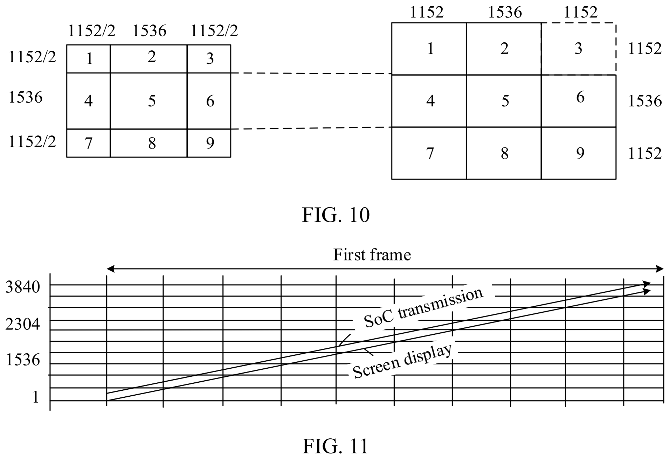

For example, when the value of q1 is set to 2, the value of q2 is set to 1, the value of p1 is set to 2, and the value of p2 is set to 1, resolutions of areas in the image output by the SoC and the image output by the display are shown in FIG. 10. Refer to FIG. 10. In the image output by the SoC, a resolution of the area 5 is 1536×1536, a resolution of the area 1 is 1152/2×1152/2, a resolution of the area 2 is 1536×1152/2, a resolution of the area 3 is 1152/2×1152/2, a resolution of the area 4 is 1152/2×1536, a resolution of the area 6 is 1152/2×1536, a resolution of the area 7 is 1152/2×1152/2, a resolution of the area 8 is 1536×1152/2, and a resolution of the area 9 is 1152/2×1152/2. Correspondingly, when performing displaying on the display, the head-mounted display device upsamples the area 1 in the image transmitted by the SoC by a factor of 2 in both the horizontal direction and the vertical direction, does not upsample the area 2 in the image transmitted by the SoC in the horizontal direction but upsamples the area 2 in the image transmitted by the SoC by a factor of 2 in the vertical direction, upsamples the area 3 in the image transmitted by the SoC by a factor of 2 in both the horizontal direction and the vertical direction, upsamples the area 4 in the image transmitted by the SoC by a factor of 2 in the horizontal direction but does not upsample the area 4 in the image transmitted by the SoC in the vertical direction, does not upsample the area 5 in the image transmitted by the SoC in either the horizontal direction or the vertical direction, upsamples the area 6 in the image transmitted by the SoC by a factor of 2 in the horizontal direction but does not upsample the area 6 in the image transmitted by the SoC in the vertical direction, upsamples the area 7 in the image transmitted by the SoC by a factor of 2 in both the horizontal direction and the vertical direction, does not upsample the area 8 in the image transmitted by the SoC in the horizontal direction but upsamples the area 8 in the image transmitted by the SoC by a factor of 2 in the vertical direction, and upsamples the area 9 in the image transmitted by the SoC by a factor of 2 in both the horizontal direction and the vertical direction.

It should be understood that, in this manner in which a larger upsampling factor is used to upsample an area farther away from the gaze area, definition of the gaze area is the highest, the definition of the gaze area is greater than definition of a transition area, and the definition of the transition area is greater than definition of a corner area.

It can be learned that, in the display method provided in this embodiment of this application, the resolution of the image output by the SoC is less than the resolution of the image output by the display, so that smoothness during display can be ensured when the transmission bandwidth of the SoC is insufficient. However, when the image is displayed to a user on the display, the gaze area included in the image displayed on the display is an area obtained by not upsampling a central area in the image transmitted by the SoC. Therefore, the definition of the gaze area can be ensured.

Optionally, in some embodiments, when the image transmitted by the SoC is displayed on the display, the gaze area may alternatively be upsampled by using a small upsampling factor, to ensure the definition of the gaze area. When an area other than the gaze area in the image transmitted by the SoC is displayed on the display, a used upsampling factor is greater than the upsampling factor used for the gaze area, and a larger upsampling factor is used to upsample an area farther away from the gaze area.

In addition, in the display method provided in this embodiment of this application, because the image output by the SoC and the image output by the display are aligned in location, data in the gaze area does not need to be completely transmitted before displaying starts to be performed on the display. Instead, displaying is performed on the display while the SoC performs transmission (as shown in FIG. 11), thereby reducing a display delay.

It should be noted that, in FIG. 9, an example in which a common gaze area is a central area (that is, a gaze area of human eyes is in a central area of the display) is used to describe the display method in this embodiment of this application. However, it should be understood that sometimes a gaze area may not be a central area.

Therefore, for the display method provided in this embodiment of this application, in some embodiments, when the head-mounted display device does not have a point-of-gaze function, a gaze area may be considered as a central area. When the head-mounted display device has the point-of-gaze function, a gaze area may include any one or more of a plurality of areas obtained through division (that is, an area on which upsampling is not performed may be any one or more of the plurality of areas obtained through division), for example, any one or more of the foregoing nine areas. In other words, when the head-mounted display device has the point-of-gaze function, an area on which upsampling is not performed is a gaze area, and the gaze area changes with eye movement; or when the head-mounted display device does not have the point-of-gaze function, an area on which upsampling is not performed is a central area.

For example, FIG. 9 is used as an example. If a gaze area of human eyes is changed to the upper left corner area 1, when displaying is performed on the display, the upper left corner area 1 is not upsampled, and other areas are upsampled when the following constraints are satisfied: A1+A2+A1=m, B1+B2+B1=n, m×n×90×24 bits/(1024^3) is less than or equal to 17 Gbps, A1×q1+A2×q2+A1×q1=3840, and B1×p1+B2×p2+B1×p1=3840.

The foregoing describes the display method provided in this embodiment of this application by using an example in which the output capability of the display is 3840×3840×90 Hz, the maximum transmission bandwidth that can be supported by the SoC is 17 Gbps/panel, and the gaze area of the user is located at the central area of the display when the user watches the display.

It should be noted that the foregoing division of the image output by the SoC into nine areas is merely an example, and does not constitute a limitation on this application.

For example, in some embodiments, there may be more areas.

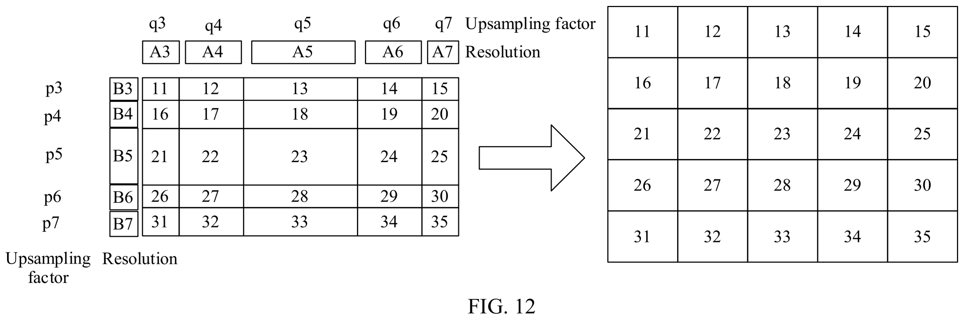

For example, the image output by the SoC may alternatively include 25 areas (an area 11 to an area 35 in FIG. 12) shown in FIG. 12, where A3+A4+A5+A6+A7=m2 and B3+B4+B5+B6+B7=n2.

Similarly, in this embodiment of this application, values of m2 and n2 and specific values of A3, A4, A5, A6, A7, B3, B4, B5, B6, B7, q3, q4, q5, q6, q7, p3, p4, p5, p6, and p7 are not limited, provided that a relationship between the values can satisfy the following relationship:
m2×n2×90×24 bits/(1024^3) is less than or equal to 17 Gbps, A3×q3+A4×q4+A5×q5+A6×q6+A7×q7=3 840, and B3×p3+B4×p4+B5×q5+B6 ×p6+B7×p7=3840.

Correspondingly, when displaying is performed on the display, for the image transmitted by the SoC, the gaze area is not upsampled, and at least one area other than the gaze area is upsampled by using a corresponding upsampling factor, so that an image of 3840×3840 is displayed on the display.

For example, if the gaze area of the user is the area 23, values of q5 and p5 may be set to 1, to ensure definition of the gaze area.

Optionally, in this example, when an area other than the area 23 in the image transmitted by the SoC is upsampled for display, a larger upsampling factor is used to upsample an area farther away from the area 23.

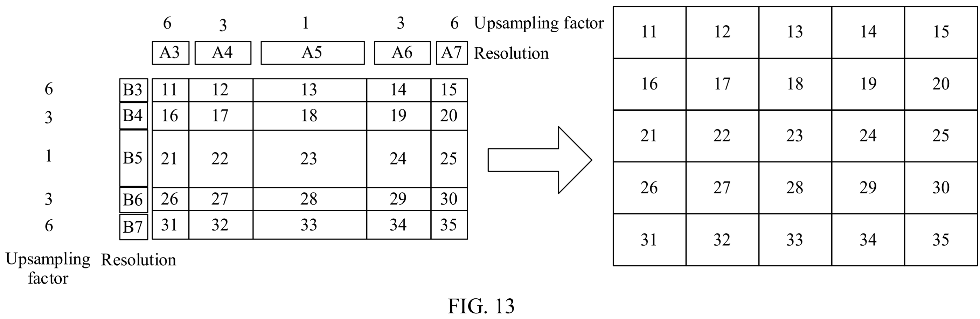

For example, as shown in FIG. 13, a value of q3 is 6, a value of q4 is 3, a value of q5 is 1, a value of q6 is 3, a value of q7 is 6, a value of p3 is 6, a value of p4 is 3, a value of p5 is 1, a value of p6 is 3, and a value of p7 is 6. Correspondingly, when performing displaying on the display, the head-mounted device upsamples the area 11, the area 15, the area 31, and the area 35 in the image transmitted by the SoC by a factor of 6 in both a horizontal direction and a vertical direction, upsamples the area 12, the area 14, the area 32, and the area 34 in the image transmitted by the SoC by a factor of 3 in the horizontal direction and upsamples the area 12, the area 14, the area 32, and the area 34 in the image transmitted by the SoC by a factor of 6 in the vertical direction, upsamples the area 16, the area 20, the area 26, and the area 30 in the image transmitted by the SoC by a factor of 6 in the horizontal direction and upsamples the area 16, the area 20, the area 26, and the area 30 in the image transmitted by the SoC by a factor of 3 in the vertical direction, does not upsample the area 13 and the area 33 in the image transmitted by the SoC in the horizontal direction but upsamples the area 13 and the area 33 in the image transmitted by the SoC by a factor of 6 in the vertical direction, upsamples the area 17, the area 19, the area 27, and the area 29 in the image transmitted by the SoC by a factor of 3 in both the horizontal direction and the vertical direction, upsamples the area 21 and the area 25 in the image transmitted by the SoC by a factor of 6 in the horizontal direction but does not upsample the area 21 and the area 25 in the image transmitted by the SoC in the vertical direction, does not upsample the area 18 and the area 28 in the image transmitted by the SoC in the horizontal direction but upsamples the area 18 and the area 28 in the image transmitted by the SoC by a factor of 3 in the vertical direction, upsamples the area 22 and the area 24 in the image transmitted by the SoC by a factor of 3 in the horizontal direction but does not upsample the area 22 and the area 24 in the image transmitted by the SoC in the vertical direction, and does not upsample the area 23 in the image transmitted by the SoC in either the horizontal direction or the vertical direction.

For another example, in some embodiments, there may be fewer areas.

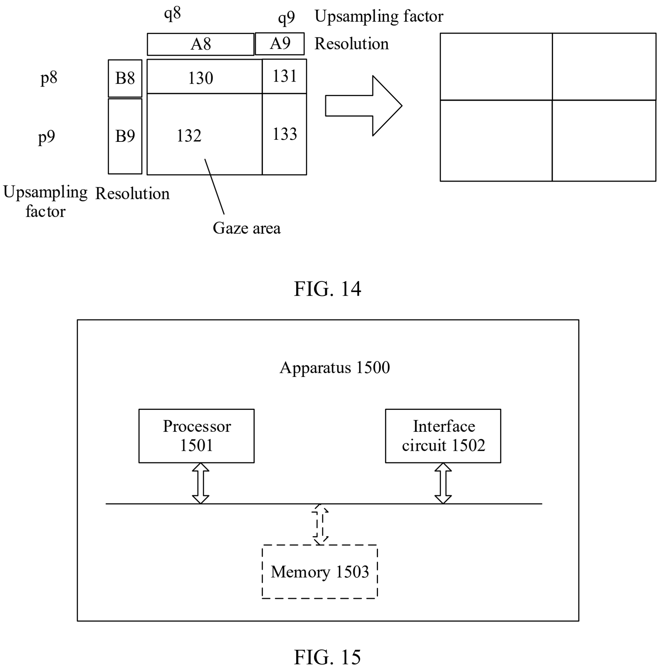

For example, the image output by the SoC may alternatively include four areas (an area 130 to an area 133 in FIG. 14) shown in FIG. 14, where A8+A9=m3, and B8+B9=n3.

Similarly, values of m3 and n3 and specific values of A8, A9, B8, B9, q8, q9, p8, and p9 are not limited in this embodiment of this application, provided that a relationship between the values can satisfy the following relationship: m3×n3×90×24 bits/(1024^3) is less than or equal to 17 Gbps, A8×q8+A9×q9=3840, and B8×p8+B9×p9=3840.

Correspondingly, when the head-mounted device performs displaying on the display, for the image transmitted by the SoC, the gaze area is not upsampled, and at least one area other than the gaze area is upsampled by using a corresponding upsampling factor, so that an image of 3840×3840 is displayed on the display.

For example, if the gaze area of the user is the area 132, values of q8 and p9 may be set to 1, to ensure definition of the gaze area.

Optionally, in this example, when an area other than the area 132 in the image transmitted by the SoC is upsampled for display, a larger upsampling factor is used to upsample an area farther away from the area 132.

It should be noted herein that the foregoing is described by using an example in which the output capability of the display is 3840×3840×90 Hz and the maximum transmission bandwidth that can be supported by the SoC is 17 Gbps/panel. However, it should be understood that the example does not constitute a limitation on this application. For example, the method may be extended to a scene in which displaying is performed on any display by receiving data transmitted by the SoC.

Specifically, it is assumed that a display that displays an image for a user is referred to as a first display, and the first display is included in an electronic device. In this case, the display method provided in this embodiment of this application includes: displaying a second image on the first display based on the first image output by the SoC.

Specifically, a resolution of the first image output by the SoC is less than a resolution of the second image output by the first display. It should be understood that the resolution of the first image output by the SoC is less than the resolution of the second image output by the first display, so that a refresh rate can be ensured when a maximum bandwidth that can be supported by the SoC is insufficient to drive the first display.

Specifically, the first image output by the SoC is divided into K areas (referred to as K first areas). Correspondingly, when performing displaying, the electronic device does not upsample content of a gaze area (also referred to as a first target area) in the first image transmitted by the SoC, to ensure definition of the gaze area, but upsamples each area other than the gaze area in the first image transmitted by the SoC by using a corresponding upsampling factor (including an upsampling factor in a horizontal direction and/or an upsampling factor in a vertical direction), to obtain K second areas corresponding to the K first areas.

That is, in this embodiment of this application, the second image displayed on the first display includes the K second areas, the K second areas include a second target area, content of the second target area is content of the first target area, and a location of the second target area in an image to which the second target area belongs is the same as a location of the first target area in an image to which the first target area belongs. In addition, a second area other than the second target area in the K second area is obtained by upsampling a corresponding first area in the image transmitted by the SoC by using a corresponding upsampling factor.

More specifically, in this embodiment of this application, different first areas in the K first areas correspond to different second areas in the K second areas, and a location of each first area in the first image is the same as a location of a corresponding second area in the second image. In other words, different first areas in the K first areas correspond to different second areas in the K second areas, and a location relationship between each first area and a gaze area in the first image is the same as a location relationship between a corresponding second area and a gaze area in the second image. In other words, in this embodiment of this application, the K first areas one-to-one correspond to the K second areas, and a location of a first area in the first image is the same as a location of a corresponding second area in the second image. In other words, in this embodiment of this application, locations of areas in the first image output by the SoC and locations of areas in the second image output by the first display are aligned.

It should be understood that, in this manner, there is no need to wait until data in the first target area is completely transmitted before displaying is performed, so that displaying is performed on the first display while the SoC transmits the data. Therefore, a display delay can be reduced.

Further, when the second image is displayed on the first display based on the first image, a larger upsampling factor is used to upsample a first area that is in the K first areas and that is farther away from the first target area. In other words, when the second image is displayed on the first display based on the first image, a larger upsampling factor is used to obtain, based on a corresponding first area, a second area that is in the K second areas and that is farther away from the second target area.

It may be understood that, in this implementation, when the second image is displayed on the first display based on the first image, a larger upsampling factor is used to upsample the first area that is in the K first areas and that is farther away from the first target area. Therefore, the K second areas displayed on the first display have the following features: A second area that is in the second image and that is farther away from the second target area is less clear, and a second area that is in the second image and that is closer to the second target area is clearer. That is, in this implementation, in the K second areas displayed on the first display, definition of second areas that are at different distances from the second target area is different.

In some embodiments, the electronic device further includes a second display. In this scene, the method in this embodiment of this application further includes: displaying a fourth image on the second display based on a third image output by the SoC, where a resolution of the third image is less than a resolution of the fourth image, the third image includes K third areas, the fourth image includes K fourth areas, different third areas in the K third areas correspond to different fourth areas in the K fourth areas, and a location of each third area in the third image is the same as a location of a corresponding fourth area in the fourth image. A resolution of a third target area in the K third areas is the same as a resolution of a corresponding fourth target area in the K fourth areas, content of the third target area is the same as content of the fourth target area, and content of each fourth area other than the fourth target area in the K fourth areas is obtained by upsampling content of a third area corresponding to the fourth area.

The solution may be similar to the display method of the first display in the first aspect. Details are not described herein again.

It should be noted herein that specific forms of the SoC and the electronic device are not limited in this embodiment of this application.

For example, in some embodiments, the SoC is included in the electronic device.

For another example, in another possible implementation, the SoC is not included in the electronic device. That is, the SoC and the electronic device are independent of each other.

FIG. 15 is a diagram of a structure of a processing apparatus of a terminal device according to another embodiment of this application. As shown in FIG. 15, a processing apparatus 1500 includes a processor 1501 and an interface circuit 1502. The processor 1501 and the interface circuit 1502 are coupled to each other. It may be understood that the interface circuit 1502 may be a transceiver or an input/output interface. Optionally, the processing apparatus 1500 may further include a memory 1503 that is configured to: store instructions executed by the processor 1501, store input data required by the processor 1501 to run the instructions, or store data generated after the processor 1501 runs the instructions.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When the foregoing embodiments are implemented by using software, all or some of the embodiments may be implemented in a form of a computer program product. The computer program product includes one or more computer programs or instructions. When the computer programs or the instructions are loaded and executed on a computer, procedures or functions in embodiments of this application are all or partially executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

## Claims

1. A display method, applied to an electronic device, wherein the electronic device comprises a first display, and the method comprises:
when the first display receives a first image, displaying, by the first display, a second image, wherein a resolution of the first image is less than a resolution of the second image, the first image comprises K first areas, the second image comprises K second areas, different first areas in the K first areas correspond to different second areas in the K second areas, and a location of each first area in the first image is the same as a location of a corresponding second area in the second image; and
the K first areas comprise a first target area, the K second areas comprise a second target area corresponding to the first target area, a resolution of the first target area is the same as a resolution of the second target area, and a resolution of each second area other than the second target area in the K second areas is greater than a resolution of a first area corresponding to the second area.

2. The method according to claim 1, wherein each second area other than the second target area in the K second areas is obtained by upsampling the first area corresponding to the second area, and a second area that is in the K second areas and that is farther away from the second target area corresponds to a larger upsampling factor.

3. The method according to claim 1 or 2, wherein the electronic device further comprises a second display, and the method further comprises:
when the second display receives a third image, displaying, by the second display, a fourth image, wherein a resolution of the third image is less than a resolution of the fourth image, the third image comprises K third areas, the fourth image comprises K fourth areas, different third areas in the K third areas correspond to different fourth areas in the K fourth areas, and a location of each third area in the third image is the same as a location of a corresponding fourth area in the fourth image; and
the K third areas comprise a third target area, the K fourth areas comprise a fourth target area corresponding to the third target area, a resolution of the third target area is the same as a resolution of the fourth target area, and a resolution of each fourth area other than the fourth target area in the K fourth areas is greater than a resolution of a third area corresponding to the fourth area.

4. The method according to claim 3, wherein the first image received by the first display is an image output by a system on chip SoC.

5. The method according to claim 4, wherein the SoC is comprised in the electronic device.

6. The method according to claim 4, wherein the SoC is not comprised in the electronic device.

7. The method according to any one of claims 1 to 6, wherein both the first image and the second image can be divided into nine areas of three rows and three columns: a central area located at an image center, an upper left corner area located at an upper left corner of the central area, an upper transition area located above the central area, an upper right corner area located at an upper right corner of the central area, a left transition area located on a left side of the central area, a right transition area located on a right side of the central area, a lower left corner area located at a lower left corner of the central area, a lower transition area located below the central area, and a lower right corner area located at a lower right corner of the central area; and
the first target area is the central area of the first image, the second target area is the central area of the second image, and that the resolution of the first target area is the same as the resolution of the second target area comprises: a resolution of the central area of the second image is the same as a resolution of the central area of the first image.

8. The method according to claim 7, wherein the upper left corner area in the second image is obtained by upsampling the upper left corner area in the first image by a factor of q1 in a horizontal direction and upsampling the upper left corner area in the first image by a factor of p1 in a vertical direction; the left transition area in the second image is obtained by upsampling the left transition area in the first image by a factor of q1 in the horizontal direction and not upsampling the left transition area in the first image in the vertical direction; and the upper transition area in the second image is obtained by not upsampling the upper transition area in the first image in the horizontal direction and upsampling the upper transition area in the first image by a factor of p1 in the vertical direction, wherein both q1 and p1 are greater than 1.

9. The method according to any one of claims 1 to 8, wherein the electronic device is a head-mounted display device.

10. A display apparatus, comprising a memory and a processor, wherein
the memory is configured to store program instructions; and
the processor is configured to execute the program instructions in the memory, to implement the method according to any one of claims 1 to 9.

11. An electronic device, comprising one or more displays, one or more memories, and one or more processors, wherein the one or more memories store one or more programs, and when the one or more processors execute the one or more programs, the electronic device is enabled to perform the display method according to any one of claims 1 to 9.

12. A computer-readable storage medium, comprising computer instructions, wherein when the computer instructions are run on an electronic device, the electronic device is enabled to perform the display method according to any one of claims 1 to 9.

13. A computer program product, wherein the computer program product comprises instructions used to implement the method according to any one of claims 1 to 9.
